# EUROPÄISCHE PATENTSCHRIFT

(11) **EP 2 421 718 B1**
(45) Veröffentlichungstag und Bekanntmachung des Hinweises auf die Patenterteilung: **05.10.2016**
(21) Anmeldenummer: 10702047.1
(22) Anmeldetag: 23.01.2010
(51) Int. Cl.: B62D 25/08, B60G 11/16, B60G 17/02

(54) **VORRICHTUNG ZUM ABSTÜTZEN EINER TRAGFEDER EINER RADAUFHÄNGUNG FÜR EIN KRAFTFAHRZEUG SOWIE VERFAHREN ZUM EINBAU EINER SOLCHEN VORRICHTUNG**
DEVICE TO SUPPORT A SUSPENSION SPRING OF A MOTOR VEHICLE AND A METHOD FOR INSTALLING SUCH A DEVICE
DISPOSITIF DE SOUTIEN D'UN RESSORT DE SUSPENSION D'UN VEHICULE AUTOMOBILE ET PROCEDE POUR L'INSTALLATION D'UN TEL DISPOSITIF

(30) Priorität: 22.04.2009 DE 102009018439
(43) Veröffentlichungstag der Anmeldung: 29.02.2012
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2010/000401
(87) Internationale Veröffentlichungsnummer: WO 2010/121679

(56) Entgegenhaltungen:
- EP-A2- 1 864 836
- DE-A1- 10 144 111
- DE-A1- 19 642 820
- DE-A1-102007 051 299
- DE-C1- 10 101 694
- JP-A- 2006 248 326

## Beschreibung

Die Erfindung betrifft eine Vorrichtung zum Abstützen einer Tragfeder einer hinteren Radaufhängung für Kraftfahrzeuge an einem Längsträger der Karosserie gemäß dem Oberbegriff des Patentanspruches 1 und ein Verfahren nach Patentanspruch 9 zum Einbau derartigen Vorrichtungen in Kraftfahrzeuge unterschiedlicher Varianten.

Eine solche Vorrichtung ist aus der DE 196 42 820 A1 bekannt. Eine andere Vorrichtung zum Abstützen einer Tragfeder einer hinteren Radaufhängung für Kraftfahrzeuge ist aus der DE 10 2007 051 299 A1 bekannt, bei der an der unteren Wand eines Längsträgers eine Niveauverstelleinrichtung befestigt ist, deren Verstellfederteller die Federauflage für die Tragfeder bildet. Der zentrisch zur Tragfeder angeordnete Elektromotor der Verstelleinrichtung ragt durch eine Ausnehmung in der Wand des Längsträgers in dessen Hohlraum hinein. Die Normalniveaulage der Verstelleinrichtung bedingt einen definierten Abstand des Verstellfedertellers zur unteren Wand des Längsträgers, um den erforderlichen Freigang des axial verfahrbaren Verstellfedertellers herzustellen.

Bei der Produktion von Kraftfahrzeugen können bei gleichem Fahrzeugtyp Varianten mit einer statischen Höhenverstellung und ohne einer solchen Höhenverstellung produziert werden. Hierzu sind jeweils angepasste Längsträgerstrukturen bereitzustellen. Soll zum Beispiel ein Aktuator für eine Höhenverstellung zum Einsatz kommen, so bedingt dies einen von der restlichen Serie abweichenden Längsträger. Der Nachteil besteht hier also in der Tatsache, dass es von einem Fahrzeugtyp zwei verschiedene Längsträgerstrukturen gäbe: Zum einen eine Struktur mit normalem Längsträger, und zum anderen eine Struktur mit für den Steller ausgebildetem Längsträger. Die Folge wäre ein enormer Aufwand in der Produktion, um die unterschiedlichen Karossen in der Fertigung zu steuern. Dies beginnt bereits im Rohbau und setzt sich über die Endmontage bis zum fertigen Fahrzeug fort. Außerdem wäre die doppelte Anzahl von Fertigungsmitteln erforderlich, angefangen von den Umformwerkzeugen der Längsträgereinzelteile, unterschiedlicher Schweißvorrichtung usw., Unterschieden bei der Montage usw.

Es sind daher beim Verfahren zur Herstellung einer Fahrzeugvariante mit und ohne Höhenverstellung eine Vielzahl an Änderungen, zum Beispiel an der Auslegung der Tragfeder und insbesondere an der Konstruktion des korrespondierenden Längsträgers erforderlich.

Eine Vorrichtung zum Abstützen einer Tragfeder, die die Möglichkeit bietet, für eine Radaufhängung mit/oder ohne Niveauverstelleinrichtung mit einfachen und montagegünstigen Mitteln größere konstruktive Freiheitsgrade in der Anordnung von Radaufhängungsteilen bereitzustellen, ist aus der EP 1 864 836 A2 bekannt. Aufgabe der Erfindung ist es, eine alternative Vorrichtung und ein alternatives Verfahren vorzuschlagen, die die gleiche möglichkeit bieten.

Diese Aufgabe wird erfindungsgemäß mit den Merkmalen des Patentanspruches 1 oder des Patentanspruches 9 gelöst. Vorteilhafte Weiterbildungen der Erfindung sind in den Unteransprüchen angeführt.

Erfindungsgemäß weist der Längsträger an seiner der Tragfeder zugewandten unteren Wand eine Einbuchtung auf, in der zumindest teilweise die Federteller-Baueinheit angeordnet ist. Die Einbuchtung des Längsträgers ist derart ausgeführt. dass die Federteller-Baueinheit entweder ein Verstellfederteller eines Stelltriebes zur Niveaustellung der Fahrzeugkarosserie oder ein Adapter ist, der eine in Höhenrichtung ortsfeste Federauflage für die Tragfeder aufweist. Eine solche Federteller-Baueinheit ist aus der EP 1 864 836 A2 bekannt.

Die Einbuchtung des Längsträgers kann somit derart bemessen sein, dass der Verstellfederteller zur Niveauverstellung der Karosserie zumindest teilweise in die Einbuchtung einfahrbar ist.

Dieses ist aus der DE 101 01 694 C1 bekannt. Die Einbuchtung in der unteren Wand des Längsträgers ist domartig ausgebildet. In der von der unteren Längsträgerwand zurückgesetzten Basiswand ist eine Ausnehmung eingearbeitet.

In der Ausnehmung kann der oben genannte Adapter eingesetzt sein, der von der Basiswand beabstandet eine die Feder zentrierende Federauflage aufweist. Damit gelingt es, die örtliche Position der Federauflage beliebig so zu bestimmen, dass sowohl abhängig von der Geometrie der Schraubendruckfeder und/oder dem Verlauf des Längsträgers der Karosserie oder von anderen, die Konstruktionslage der Radaufhängung beeinflussenden Bauteilen die definierte Normallage der Karosserie erreichbar ist. Dabei kann der Adapter ein fertigungstechnisch einfach ausgeführtes Bauteil sein, das montageeinfach in die Ausnehmung eingesteckt und/oder an der unteren Wand des Längsträgers befestigt ist.

In der unteren Wand des Längsträgers ist eine domartige Einbuchtung ausgebildet, in deren zurückgesetzter Basiswand die Ausnehmung eingearbeitet ist, in die dann der Adapter entsprechend einsetzbar ist.

In vorteilhafter Weiterbildung der Erfindung kann der Adapter baulich und fertigungstechnisch einfach als rotationssymmetrischer Grundkörper ausgeführt sein, mit einem in die Ausnehmung einragenden Zentrierabschnitt, einem daran anschließenden, an der Basiswand anliegenden Radialflansch und einer in den Grundkörper eingeformten, ringförmigen Federauflage mit einem Zentrierdorn.

Dabei kann in vorteilhafter Weise zumindest der Zentrierabschnitt, bevorzugt aber auch der an den Zentrierabschnitt anschließende Grundkörper teilweise rohrförmig ausgeführt sein. Daraus resultiert eine ausreichend drucksteife und gewichtsgünstige Konstruktion des Adapters, der zudem in vorteilhafter Weise aus einer Leichtmetalllegierung hergestellt sein kann.

Fertigungstechnisch günstig kann ferner der Adapter zweiteilig ausgebildet sein, mit einem tassenförmigen, den Zentrierabschnitt und den Radialflansch aufweisenden Oberteil und einem die Federauflage und den Zentrierdorn aufweisenden Unterteil, die mittels einer Führungshülse zueinander zentriert sind. Dies ergibt eine gießtechnisch einfache Konstruktion des Adapters, bei der gegebenenfalls das Unterteil durch ein bereits vorhandenes Serienteil ersetzt sein kann.

Des Weiteren wird vorgeschlagen, dass der Adapter mit dem vorgegebenen Abstand seiner Federauflage zur Wand oder Basiswand des Längsträgers derart ausgelegt ist, dass in Verbindung mit der Feder eine vordefinierte Normalniveaulage der Karosserie gegeben ist, die mit einer anstelle des Adapters montierten, elektromotorischen Niveauverstelleinrichtung mit deren entsprechenden Normalniveaueinstellung übereinstimmt. Dies ermöglicht bei einem gemischten Verbau von Radaufhängungen mit und ohne Niveauverstelleinrichtung die Verwendung einer Vielzahl von Gleichteilen, insbesondere des Längsträgers, des Radträgers und der eingesetzten Schraubendruckfeder, wobei anstelle der Niveauverstelleinrichtung lediglich der Adapter einzubauen ist.

Die Einbuchtung des Längsträgers ist derart ausgeführt, dass ein Verstellfederteller als Federauflage eines Stelltriebes zur Niveauverstellung der Karosserie in die Einbuchtung einfahrbar ist und dass der den Stelltrieb antreibende Elektromotor durch die Ausnehmung in der Basiswand der Einbuchtung hindurch in den Längsträger einragt. Schließlich kann dazu der Verstellfederteller in der dem Normalniveau entsprechenden Mittelhöhenstellung den gleichen Abstand s aufweist, der der Federauflage des Adapters entspricht. Dies ermöglicht eine besonders kompakte Anordnung der Niveauverstelleinrichtung am Längsträger, wobei die besondere Konstruktion des Längsträgers durch die Verwendung des Adapters auch bei einer Radaufhängung ohne Niveauverstelleinrichtung beibehalten werden kann.

Ein Ausführungsbeispiel der Erfindung ist im folgenden mit weiteren Einzelheiten näher erläutert. Die schematische Zeichnung zeigt in:
- Fig. 1: grob schematisch eine hintere Radaufhängung für Kraftfahrzeuge in einer Ansicht von hinten, mit einem Radträger, einer Schraubendruckfeder als Tragfeder, die an einem Längsträger der Karosserie des Kraftfahrzeuges über einen einteiligen Adapter abgestützt ist;
- Fig. 2: einen in den Längsträger gemäß Fig. 1 eingesetzten, zweiteiligen Adapter in einem Längsschnitt; und
- Fig. 3: die hintere Radaufhängung analog Fig. 1, jedoch anstelle eines Adapters als Federstütze mit einer am Längsträger angeordneten Niveauverstelleinrichtung mit einem Verstellfederteller als axial verstellbare Federauflage.

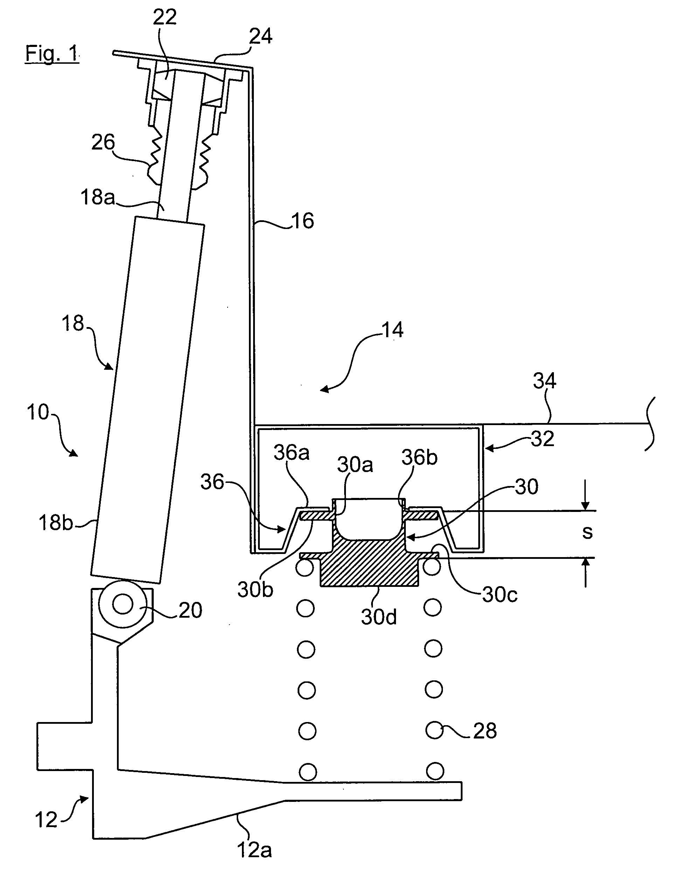

In der Fig. 1 ist mit 10 eine hintere Radaufhängung für Kraftfahrzeuge bezeichnet, die jedoch nur soweit dargestellt ist, als dies für die vorliegende Erfindung relevant ist.

Die Radaufhängung 10 weist unter anderem einen Radträger 12 auf, der über nicht dargestellte Radführungselemente beziehungsweise Lenker am Aufbau 14 der Karosserie des Kraftfahrzeuges angelenkt ist und der in üblicher Weise ein drehbar gelagertes Hinterrad aufnimmt.

Zwischen dem Radträger 12 und einer Radhausschale 16 ist eine TeleskopStoßdämpfer 18 angeordnet, der über ein Gelenk 20 mit dem Radträger 12 und über ein Dämpferlager 22 mit einer Konsole 24 des Aufbaus 14 verbunden ist. An der Kolbenstange 18a des Stoßdämpfers 18 ist ferner ein Anschlagpuffer 26 vorgesehen, der bei stärkerem Einfedern der Radaufhängung 10 an dem Dämpferrohr 18b zur Anlage kommt.

Der Radträger 12 weist zudem einen etwa horizontal nach innen ragenden Ausleger 12a auf, an dem eine Schraubendruckfeder beziehungsweise Tragfeder 28 angreift.

Die Tragfeder 28 ist andererseits unter Zwischenschaltung eines Adapters 30 an einem Längsträger 32 des Aufbaus 14 abgestützt.

Der Längsträger 32 verläuft in bekannter Weise unterhalb eines Ladebodens 34 und innerhalb der Radhausschale 16 des Aufbaus 14 und ist unter anderem mit diesen Karosseriebauteilen fest verbunden.

Im Bereich der Abstützung der Tragfeder 28 am Längsträger 32 ist in dem Längsträger 32 eine domartige, etwa kreissymmetrische Einbuchtung 36 eingeformt, deren zurückgesetzte Basiswand 36a zudem eine zentrische Ausnehmung 36b aufweist.

In diese Ausnehmung 36b ist der Adapter 30 mit einem rohrförmigen Zentrierabschnitt 30a eingesetzt. Ein an den Zentrierabschnitt 30a angeformter Radialflansch 30b stützt sich dabei an der Basiswand 36a der Einbuchtung 36 ab.

Ferner weist der Grundkörper des Adapters 30 eine als Federteller ausgebildete Federauflage 30c auf, an die ein nach unten ragender Zentrierdorn 30d anschließt. Die Federauflage 30c ist im Außendurchmesser etwa gleich dem Radialflansch 30b, der innerhalb der Einbuchtung 36 an deren Basiswand 36a anliegt.

Die Federkräfte der Tragfeder 28 wirken über die ringförmige Federauflage 30c und den Radialflansch 30b des Adapters 30 auf den Längsträger 32 beziehungsweise den Aufbau 14.

Es versteht sich, dass am Ausleger 12a des Radträgers 12 ebenfalls eine Federauflage vorgesehen ist und dass jeweils zwischen den Federauflagen und den korrespondierenden Federwindungen der Tragfeder 28 in üblicher Weise gummielastische Dämpfungsringe (nicht dargestellt) eingesetzt sind.

Der Adapter 30 ist aus einer Leichtmetalllegierung gießtechnisch hergestellt. Zur Erzielung einer gewichtsgünstigen Konstruktion erstreckt sich die rohrförmige Gestaltung des Zentrierabschnittes 30a, wie ersichtlich ist, in den Grundkörper des Adapters 30 hinein.

Der Adapter 30 ist geometrisch so ausgelegt, dass dessen Federauflage 30c einen definierten Abstand s zur Basiswand 36a des Längsträgers 32 aufweist.

Dieser Abstand s ergibt unter Berücksichtigung der Auslegung der Tragfeder 28 und aller weiteren, die Niveaulage der Karosserie des Kraftfahrzeuges bestimmenden Bauteile (unter anderem des Auslegers 12a) die Höhenlage der Karosserie in einem definierten Normalniveau. Weitere Niveaulagen (unterhalb des Normalniveaus beziehungsweise der Konstruktionslage) ergeben sich in üblicher Weise insbesondere durch zusätzliche Beladung des Kraftfahrzeuges beziehungsweise durch eine stärkere Gewichtsbeaufschlagung oder dynamische Belastung der Tragfeder 28.

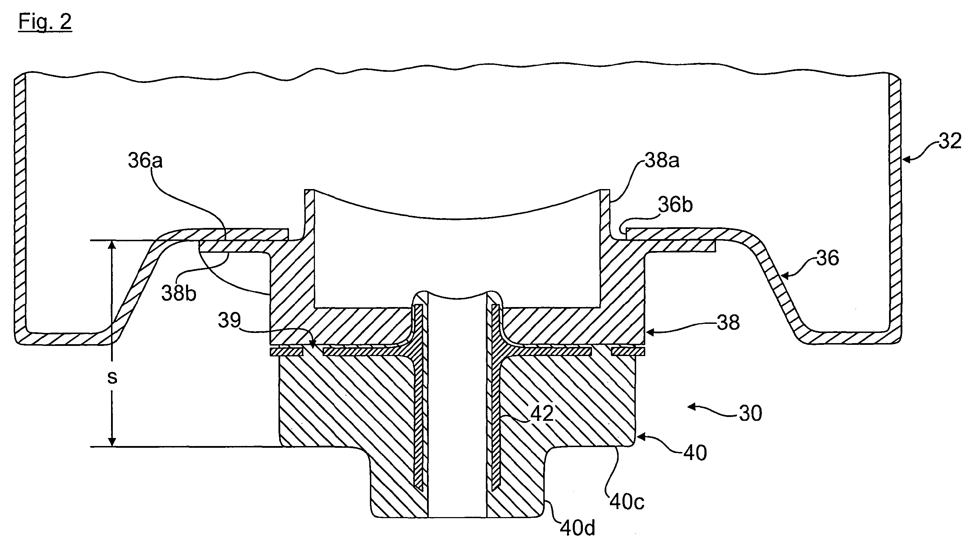

In der Fig. 2 ist der Adapter 30 zweiteilig ausgeführt. Der Adapter 30 setzt sich aus einem tassenförmigen Oberteil 38 und einem Unterteil 40 rotationssymmetrischer Ausführung zusammen, die an stirnseitigen Trennflächen 39 aneinander anliegen.

An dem Oberteil 38 des Adapters 30 ist konform zu dem Adapter 30 gemäß Fig. 1 ein Zentrierabschnitt 38a und ein Radialflansch 38b angeformt, mittels denen das Adapter-Oberteil 38 in die Ausnehmung 36b eingesetzt und an der Basiswand 36a abgestützt ist.

In das Unterteil 40 des Adapters 30 ist eine Führungshülse 42 aus Stahl eingegossen, die im montierten Zustand wie ersichtlich in das Oberteil 38 zentrierend einragt.

Ferner ist an dem Unterteil 40 analog zum Adapter 30 gemäß Fig. 1 die Federauflage 40c mit Zentrierdorn 40d angeformt.

Der Abstand s zwischen der Basiswand 36a des Längsträgers 32 und der Federauflage 40c definiert wiederum wie vorbeschrieben die Normalniveaulage der Karosserie des Kraftfahrzeuges.

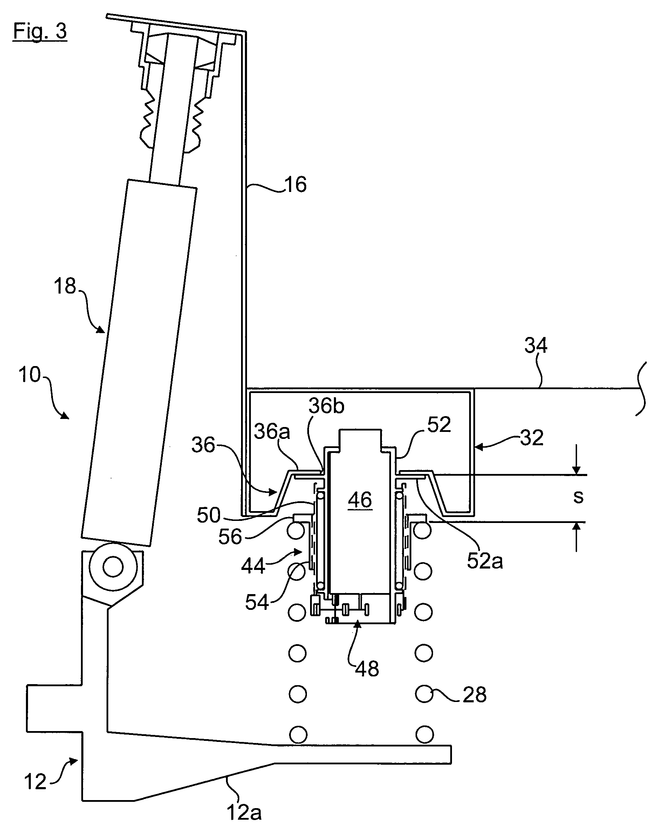

Die Fig. 3 zeigt eine hintere Radaufhängung 10, die soweit im Folgenden nicht beschrieben analog zur Fig. 1 ausgeführt ist. Gleiche Teile sind mit gleichen Bezugszeichen versehen.

Abweichend zur Fig. 1 ist zwischen dem Längsträger 32 und der Tragfeder 28 kein Adapter 30 eingesetzt, sondern ist die Federabstützung mittels einer Niveauverstelleinrichtung 44 bewerkstelligt.

Die Niveauverstelleinrichtung 44 weist einen Elektromotor 46 und einen Stelltrieb 48 mit einer drehbar gelagerten Gewindespindel 50 auf. Das Gehäuse 52 der Verstelleinrichtung 44 ragt in die Tragfeder 28 und in die Ausnehmung 36b der Basiswand 36a der Einbuchtung 36 in den Hohlraum des Längsträgers 32 hinein und ist mittels eines Radialflansches 52a an der Basiswand 36a abgestützt.

Auf der Gewindespindel 50 ist unter Zwischenschaltung von Kugeln eine Kugelgewindemutter 54 gelagert, die bei einem Verdrehen der Gewindespindel 50 entsprechend axial verschoben wird. Die Kugelgewindemutter 54 ist fest mit einem ringförmigen Verstellfederteller 56 als Federauflage für die Tragfeder 28 verbunden. Der Verstellfederteller 56 weist etwa den gleichen Außendurchmesser auf als die Federauflage 30c beziehungsweise 40c der Fig. 1 oder 2.

Mittels des Elektromotors 46 und des gesamten Stelltriebes 48, 50, 54 kann der Verstellfederteller 56 aus der gezeichneten Mittelhöhenstellung heraus nach oben oder unten verfahren werden, wodurch die Karosserie des Kraftfahrzeuges aus der Normalniveaulage in eine Tiefniveaulage oder eine Hochniveaulage beliebig verstellbar ist. Bei der Verstellung des Verstellfedertellers 56 nach oben kann dieser räumlich günstig in die Einbuchtung 36 des Längsträgers 32 einfahren.

In der konstruktiv vorgegebenen Mittelhöhenstellung des Verstellfedertellers 56 liegt dabei ein Abstand s zwischen der Basiswand 36a des Längsträgers 32 und der Federauflage beziehungsweise dem Verstellfederteller 56 vor, der gleich dem Abstand s der Radaufhängung 10 gemäß Fig. 1 mit dem Adapter 30 ist.

Hinsichtlich der Funktion der Niveauverstellleinrichtung 44 im Detail wird beispielsweise auf die eingangs genannte DE 10 2007 051 299 A1 verwiesen, obwohl auch andere, elektromotorisch betätigte Verstelleinrichtungen verwendet sein können.

## Patentansprüche

1. Vorrichtung zum Abstützen einer Tragfeder (28) einer Radaufhängung (10) für ein Kraftfahrzeug, welche Tragfeder (28) über eine Federteller-Baueinheit (30; 44) an einer, eine Ausnehmung (36a) aufweisenden Basiswand (36a) eines Längsträgers (32) der Karosserie abstützbar ist, wobei der Längsträger (32) an seiner der Tragfeder (28) zugewandten unteren Wand eine Einbuchtung (36) aufweist, die domartig ausgebildet ist und in der die Basiswand (36a) mit der Ausnehmung (36b) zurückgesetzt eingearbeitet ist, **dadurch gekennzeichnet,**
**dass** entweder die Federteller-Baueinheit (44) mit einem Verstellfederteller (56) eines von einem Elektromotor (46) antreibbaren Stelltriebes (48) zur Niveauverstellung der Karosserie ausgeführt ist, oder
**dass** bei der Ausführung des Kraftfahrzeugs ohne Höhenverstellung die Federteller-Baueinheit ein Adapter (30) mit einer in Höhenrichtung ortsfesten Federauflage (30c; 40c) ist, wobei
die Einbuchtung (36) des Längsträgers (32) derart ausgeführt ist, dass der Verstellfederteller (56) in die Einbuchtung (36) so einfahrbar ist, dass er zumindest teilweise innerhalb der Einbuchtung (36) angeordnet ist, und wobei der Elektromotor (46) durch die Ausnehmung (36b) der Basiswand (36a) hindurch in den Längsträger (32) einragt.

2. Vorrichtung nach Anspruch 1, **dadurch gekennzeichnet, dass** der Verstellfederteller (56) in der dem Normalniveau entsprechenden Mittelhöhenstellung den gleichen Abstand (s) aufweist, der der Federauflage (30c; 40c) des Adapters (30) entspricht.

3. Vorrichtung nach einem der Ansprüche 1 oder 2, **dadurch gekennzeichnet, dass** der Adapter (30) als rotationssymmetrischer Grundkörper ausgeführt ist, insbesondere mit einem in die Ausnehmung (36b) einragenden Zentrierabschnitt (30a; 38a), einem daran anschließenden, an der Basiswand (36a) anliegenden Radialflansch (30b; 38b) und einer in den Grundkörper eingeformten, ringförmigen Federauflage (30c; 40c) mit einem Zentrierdorn (30d; 40d).

4. Vorrichtung nach Anspruch 3, **dadurch gekennzeichnet, dass** zumindest der Zentrierabschnitt (30a; 38a) rohrförmig ausgebildet ist.

5. Vorrichtung nach Anspruch 4, **dadurch gekennzeichnet, dass** der an den Zentrierabschnitt (30a; 38a) anschließende Grundkörper teilweise ebenfalls rohrförmig ausgeführt ist.

6. Vorrichtung nach einem der Ansprüche 1 bis 5, **dadurch gekennzeichnet, dass** der Adapter (30) zweiteilig ausgebildet ist, mit einem tassenförmigen, den Zentrierabschnitt (38a) und den Radialflansch (38b) aufweisenden Oberteil (38) und einem die Federauflage (40c) und den Zentrierdorn (40d) aufweisenden Unterteil (40), die mittels einer Führungshülse (42) zueinander zentriert sind.

7. Vorrichtung nach einem der Ansprüche 1 bis 6, **dadurch gekennzeichnet, dass** der Adapter (30) aus einer Leichtmetalllegierung hergestellt ist.

8. Vorrichtung nach einem der Ansprüche 1 bis 7, **dadurch gekennzeichnet, dass** der Adapter (30) mit dem vorgegebenen Abstand (s) seiner Federauflage (30c; 40c) zur Wand oder Basiswand (36a) des Längsträgers (32) derart ausgelegt ist, dass in Verbindung mit der Tragfeder (28) eine vordefinierte Normal Niveaulage der Karosserie gegeben ist, die mit einer anstelle des Adapters (30) montierten, elektromotorischen Niveauverstelleinrichtung (44) mit deren entsprechenden Normalniveaueinstellung übereinstimmt.

9. Verfahren zum Einbau einer Federteller-Baueinheit (30; 44) eine Vorrichtung nach einem der vorhergehenden Ansprüche in ein Kraftfahrzeug, in welchem Verfahren bei der Ausführung des Kraftfahrzeugs mit Höhenverstellung die Federteller-Baueinheit ein Stelltrieb (44) zur Niveauverstellung der Karosserie ist, und bei der Ausführung des Kraftfahrzeugs ohne Höhenverstellung die Federteller-Baueinheit ein Adapter (30) mit einer in Höhenrichtung ortsfesten Federauflage (30c; 40c) ist.

## Claims

1. Device for supporting a bearing spring (28) of a wheel suspension (10) for a motor vehicle, which bearing spring (28) can be supported by means of a spring disc component (30; 44) on a base wall (36a), comprising a recess (36b), of a longitudinal beam (32) of the bodywork, the longitudinal beam (32) having, on its lower wall facing toward the bearing spring (28), an indentation (36) which is configured in the shape of a dome and in which the base wall (36a) with the recess (36b) is formed in a set-back fashion, **characterised in that**
either the spring disc component (44) is configured with an adjustment spring disc (56) of an actuator (48), which can be driven by an electric motor (46), for level adjustment of the bodywork, or
**in that**, if the motor vehicle is configured without height adjustment, the spring disc component is an adapter (30) having a spring support (30c; 40c) which is fixed in a height direction,
the indentation (36) of the longitudinal beam (32) being configured so that the adjustment spring disc (56) can be inserted into the indentation (36) in such a way that it is arranged at least partially inside the indentation (36),
and the electric motor (46) extending through the recess (36b) of the base wall (36a) into the longitudinal beam (32).

2. Device according to Claim 1, **characterised in that** the adjustment spring disc (56), in the central height setting corresponding to the normal level, has the same distance (s), which corresponds to the spring support (30c; 40c) of the adapter (30)

3. Device according to one of Claims 1 and 2, **characterised in that** the adapter (30) is configured as a rotationally symmetrical base body, in particular having a centring section (30a; 38a) protruding into the recess (36b), a radial flange (30b; 38b) following on therefrom and bearing on the base wall (36a), and an annular spring support (30c; 40c), formed in the base body, with a centring pin (30d; 40d).

4. Device according to Claim 3, **characterised in that** at least the centring section (30a; 38a) is configured in the shape of a tube.

5. Device according to Claim 4, **characterised in that** the base body following on from the centring section (30a; 38a) is partially likewise configured in the shape of a tube.

6. Device according to one of Claims 1 to 5, **characterised in that** the adapter (30) is configured in two parts, with a cup-shaped upper part (38) comprising the centring section (38a) and the radial flange (38b), and a lower part (40) comprising the spring support (40c) and the centring pin (40d), these parts being centred with respect to one another by means of a guide sleeve (42).

7. Device according to one of Claims 1 to 6, **characterised in that** the adapter (30) is made of a light metal alloy.

8. Device according to one of Claims 1 to 7, **characterised in that** the adapter (30) is configured with the predetermined distance (s) of its spring support (30c; 40c) from the wall or base wall (36a) of the longitudinal beam (32) in such a way that, in conjunction with the bearing spring (28), there is a predefined normal level position of the bodywork, which coincides with an electric-motor level adjustment apparatus (44), mounted instead of the adapter (30), with its corresponding normal level setting.

9. Method for installing a spring disc component (30; 44) of a device according to one of the preceding claims in a motor vehicle, in which method, when the motor vehicle is configured with height adjustment, the spring disc component is an actuator (44) for level adjustment of the bodywork, and when the motor vehicle is configured without height adjustment, the spring disc component is an adapter (30) having a spring support (30c; 40c) which is fixed in the height direction.

## Revendications

1. Dispositif de soutien d'un ressort porteur (28) d'une suspension de roue (10) pour un véhicule automobile, lequel ressort porteur (28) peut être soutenu par l'intermédiaire d'un élément formant coupelle de ressort (30; 44) sur une paroi de base (36a), comportant un évidément (36a), d'un longeron (32) de la carrosserie, le longeron (32) comportant sur sa paroi inférieure, proche du ressort porteur (28), un retrait (36) qui est conçu en forme de dôme et dans lequel est enfoncée la paroi de base (36a) avec l'évidement (36b),
**caractérisé en ce que**
soit l'élément formant coupelle de ressort (44) est réalisé avec une coupelle de ressort d'ajustement (56) d'un mécanisme de réglage (48) pouvant être entraîné par un moteur électrique (46) pour le réglage de niveau de la carrosserie,
soit, lors de la réalisation du véhicule automobile sans réglage de hauteur, l'élément formant coupelle de ressort est un adaptateur (30) avec un support de ressort (30c; 40c) immobile dans le sens de la hauteur,
le retrait (36) du longeron (32) étant conçu de telle sorte que la coupelle de ressort d'ajustement (56) peut être introduite dans le retrait (36) de telle sorte qu'elle est placée au moins en partie à l'intérieur du retrait (36)
et le moteur électrique (46) pénétrant dans le longeron (32) à travers l'évidement (36b) de la paroi de base (36a).

2. Dispositif selon la revendication 1, **caractérisé en ce que** la coupelle de ressort d'ajustement (56) a, dans la position en hauteur moyenne correspondant au niveau normal, la même distance (s) qui correspond au support de ressort (30c; 40c) de l'adaptateur (30).

3. Dispositif selon l'une des revendications 1 ou 2, **caractérisé en ce que** l'adaptateur (30) est réalisé comme un corps de base symétrique en rotation, notamment avec un tronçon de centrage (30a; 38a) qui pénètre dans l'évidement (36b), avec un collet radial (30b; 38b) qui lui fait suite et qui s'appuie à la paroi de base (36a) et avec un support de ressort (30c; 40c) annulaire qui est formé dans le corps de base avec une broche de centrage (30d; 40d).

4. Dispositif selon la revendication 3, **caractérisé en ce que** au moins le tronçon de centrage (30a; 38a) est conçu en forme de tube.

5. Dispositif selon la revendication 4, **caractérisé en ce que** le corps de base qui fait suite au tronçon de centrage (30a; 38a) est aussi réalisé en partie en forme de tube.

6. Dispositif selon l'une des revendications 1 à 5, **caractérisé en ce que** l'adaptateur (30) est conçu en deux parties, avec une partie supérieure (38), en forme de tasse, qui comporte le tronçon de centrage (38a) et le collet radial (38b) et avec une partie inférieure (40) qui comporte le support de ressort (40c) et la broche de centrage (40d), ces deux parties étant centrées l'une par rapport à l'autre au moyen d'un manchon de guidage (42).

7. Dispositif selon l'une des revendications 1 à 6, **caractérisé en ce que** l'adaptateur (30) est fabriqué en un alliage métallique léger.

8. Dispositif selon l'une des revendications 1 à 7, **caractérisé en ce que** l'adaptateur (30) est conçu avec la distance prédéterminée (s) de son support de ressort (30c; 40c) à la paroi ou paroi de base (36a) du longeron (32) de manière à avoir, en liaison avec le ressort porteur (28), une position de niveau normale prédéfinie de la carrosserie qui coïncide, dans le cas d'un dispositif de réglage de niveau (44) monté à la place de l'adaptateur (30) et entraîné par un moteur électrique, avec son réglage de niveau normal correspondant.

9. Procédé pour le montage d'un élément formant coupelle de ressort (30; 44) d'un dispositif selon l'une des revendications précédentes dans un véhicule automobile, procédé dans lequel, lors de la réalisation du véhicule automobile avec un réglage en hauteur, l'élément formant coupelle de ressort est un mécanisme de réglage (44) pour le réglage de niveau de la carrosserie et, lors de la réalisation du véhicule automobile sans réglage en hauteur, l'élément formant coupelle de ressort est un adaptateur (30) avec un support de ressort (30c; 40c) immobile dans le sens de la hauteur.
